# EUROPEAN PATENT APPLICATION

(11) **EP 4 292 813 A1**
(43) Date of publication of application: **20.12.2023**
(21) Application number: 23178089.1
(22) Date of filing: 07.06.2023
(51) Int. Cl.: B32B 27/22, B32B 27/30, A47H 23/10, B60J 7/00, E06B 9/08

(54) **TRANSPARENT COMPOSITE FILM**

(30) Priority: 14.06.2022 IT 202200012545
(71) Applicant: Giovanardi di Giovanardi Carlo & C. SNC, 46039 Villimpenta (MN) (IT)
(72) Inventor: BERTACCHI, Andrea, 22036 ERBA (IT); BERTACCHI, Attilio, 22036 ERBA (IT); BERTACCHI, Dario, 23900 LECCO (IT); PIOVAN, Massimiliano, 37045 LEGNAGO (IT)
(74) Representative: Mari, Marco Giovanni

(57) **Abstract**

The invention relates to the field of transparent plastic films used for making structures which identify and delimit outdoor living spaces, and for the more general separation of outdoor and indoor environments.

In more detail, it relates to a transparent composite film to be used (but not only) as a vertical roller awning, for example for the lateral closure of pergolas and Pergotenda sliding covering system, verandas, gazebos and dehors.

Said transparent composite film (100) comprises:
- a first external film (1) in PVC;
- a second external film (2) in PVC;
- an intermediate layer,
where said intermediate layer comprises a PVC foil (3) free of plasticizing substances.

## Description

### Technical field of application

The invention relates to the field of transparent plastic films used for making structures which identify and delimit outdoor living spaces, and for the more general separation of outdoor and indoor environments.

In more detail, it relates to a transparent composite film to be used (but not only) as a vertical roller awning, for example for the lateral closure of pergolas and Pergotenda sliding covering system, verandas, gazebos and dehors.

### Background art

Currently, the need to install closure systems for outdoor spaces that can be rolled up and transparent at the same time is increasingly felt, as an alternative to rigid transparent structures since, advantageously, no concessions or permits are required for their installation, unless there are any regulations of municipalities/provinces.

Compared to other heavy structures with fixing and anchoring to the ground, they are also more manageable, lighter, without losing heat and sound insulation performance.

The traditional solutions used today involve the use of a single-layer calendared film in plasticized PVC with a thickness of between 200 µm and 800 µm.

For the applications described above, the PVC film used requires the addition of plasticizers, essential to make it soft and flexible, as well as additive substances, such as for example thermal and UV stabilizers which counteract the degradation (premature aging) caused by heat and solar radiation, fire retardants and flame retardants, lubricants to prevent adherence phenomena, biocides with an anti-mould action and possible pigments.

These single-layer PVC films are made using the calendar process and marketed in rolls as a semi-finished product. Once unrolled on special benches, the plastic film is then cut into sheets "to size", which will then be joined by welding (hot fusion of the ends) into larger sheets until the dimensions established in the project are reached.

The problem linked to the calendaring production process is essentially stretching, with the consequent shape memory imprinted on the plastic material along the feeding direction into the machine (i.e. along the direction of unrolling of the film, not transversely). Specifically, the long polymer chain that makes up the film is stretched, elongated, due to the heat and tension applied, making the weak bonds typical of the amorphous structure of PVC more labile and less binding. In fact, the material must necessarily always be kept in tension during the winding on the calendars in order to be able to model it in the desired thickness, make it planar, polish it and also avoid the formation of air bubbles between the winding coils. This operation actually causes a situation of non-balance of the material itself which in this sense accumulates "internal" tensions physically blocked by the winding in rolls. Once unrolled, the film, facilitated by the ambient heat, tends to lose tension, as the polymer chains return to form balls due to the effect of the weak inter-chain bonds, and therefore tends to shrink in percentages ranging from about 1% up to 8%.

These deformations, if they occur after the fabric has been made and the awning has been installed, as usually happens, are particularly problematic since they do not allow for correct operation of the awning itself, which blocks during raising/lowering.

Although there are different "qualities" of transparent calendared films (especially in terms of softness, colour, dimensions, thicknesses, specific properties in relation to uses and markets), the critical aspect of shrinkage has never been completely resolved.

To overcome these drawbacks, various expedients have been considered over time.

A first expedient provides for a thermal pre-treatment of the material before the "customized" packaging step, i.e. a gradual heating process of the PVC film followed by a cooling step, in order to induce a controlled shrinkage of the material itself.

This thermal pre-treatment can take place either through a gradual heating system in a ventilated oven, with a special controlled temperature ramp (up to 50-70 °C), or through IR (infrared) lamps, placed on a special carriage adapted to slide over PVC sheets already pre-cut resting on a workbench.

Disadvantageously, such thermal pre-treatments result in a loss of transparency due to the PVC/plasticizer phase separation. Furthermore, these thermal pre-treatments ruin the aesthetics of the film, cause premature aging of the material caused by thermal shock, require a huge investment for the machinery, with a considerable lengthening of production times (these are treatments that require about 20/30 min per sheet).

A second expedient concerns not so much the treatment of the material itself as much as a particular system of working the film. Traditionally, the films are spliced and installed with the welding line parallel to the ground and therefore perpendicular to the winding direction (referring to a vertical awning). Compulsory condition to avoid differences in thickness which would inevitably create folds. The trick consists in making a junction of the end sheets and not with an overlap. This makes it possible to have a "flat", "zero thickness" weld, thus installing the film on the structure with the weld line vertical to the ground. In this way, for applications for example in vertical roller awnings, any shrinkage is limited above by the winder tube and below by the base acting as a weight.

Disadvantageously, the vertical welding of PVC sheets is very expensive: only a complex welding machine is able to carry out only and exclusively this type of processing.

A third expedient, the most recent known to date, is the use, as an alternative to a monolayer PVC film, of a multilayer film comprising at least one layer stable at temperatures and which therefore acts as a rigid support for the entire film.

An example of a known multilayer film is a film made up of three layers, of which the two external layers in PVC allow the sheets to be welded together, and the intermediate layer of low thickness in a stable plastic, such as for example a PET film (polyester) with high compatibility with PVC, gives stability to the entire product.

However, even this solution has limitations and drawbacks.
The resulting film:
- turns out to be very rigid, less elastic and therefore subject to permanent folds if not treated with due care;
- can only be welded by overlapping where a partial fusion of the external layers that make up the two PVC sheets takes place, obtaining a weak weld, prone to delamination phenomena;
- is not recyclable because it is not mono-material, resulting in the PVC being contaminated and therefore not remeltable;
- exhibits defects from an aesthetic point of view, as the internal polyester layer, being of different densities, creates different diffraction phenomena and compromises the field of vision.

### Disclosure of the invention

The object of the present invention is to eliminate the drawbacks and disadvantages described above, obtaining a definitive solution to the problem of shrinkage of calendared films.

The main object of the present invention is therefore that of realizing a transparent composite film, free from visual defects, dimensionally stable, and not subject to deformations, especially deformations to thermal stress, easily weldable with all available technologies and machines, recyclable, of simple and cost-effective production.

The objects are achieved with a transparent composite film comprising:
- a first external PVC film;
- a second external PVC film;
- an intermediate layer,
characterized in that said intermediate layer comprises a PVC foil free from plasticizing substances.

Further features of the film object of the invention are described in the dependent claims.

A transparent composite film according to the invention has numerous advantages:
- the intermediate layer in PVC free of plasticizers gives the entire composite film a high stability to temperature variations, even up to 100 °C;
- the intermediate layer in PVC free of plasticizers gives the composite film, unlike the traditionally used film with polyester, perfect transparency;
- it can be butt welded "at zero thickness" because all three layers are in PVC and therefore compatible with the special process;
- it can be welded by overlapping as it has no tendency to delaminate, because all the layers, being in PVC and therefore compatible in terms of melting temperatures, are welded at the same time;
- if folded it does not generate whitening along the folding lines and therefore does not undergo permanent mechanical degradation;
- it is 100% recyclable, remeltable PVC;
   - it is easy and cost-effective to produce, as it does not require pre-treatments or special processes.

### Brief description of the drawings

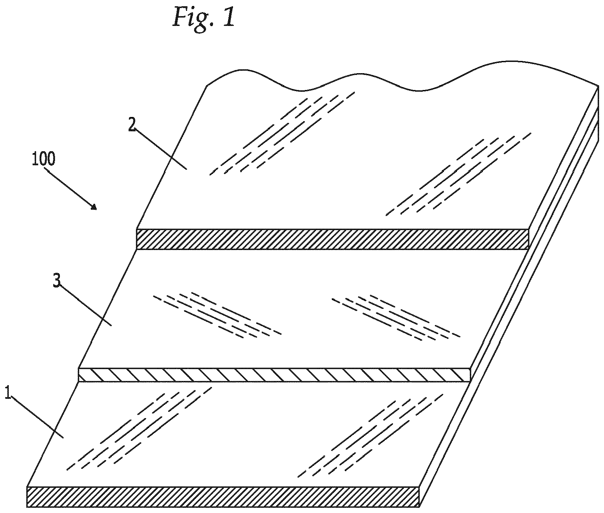

These and other advantages will become more apparent from the description of the invention, set forth below with the aid of the drawing which represents an example of embodiment, where Figure 1 illustrates, in a partially sectioned isometric view with proportions intentionally deformed for clarity of representation, the stratigraphy of a transparent composite film according to the invention.

### Detailed description of a preferred embodiment of the invention

With reference to Figure 1, a transparent composite film 100 is shown, suitable for being used, for example, to make a roll-up side awning of an outdoor pergola.

Said transparent composite film 100 comprises:
- a first external film 1 in PVC;
- a second external film 2 in PVC;
- an intermediate layer comprising a PVC foil 3 free of plasticizing substances.

Said first 1 and second 2 external PVC films comprise plasticizing substances whose main function is to intercalate with the rigid polymeric chains of the PVC to increase their mobility and flexibility, making them more "plastic" and therefore suitable for use and the specific task.

Said first 1 and second 2 external PVC films include further additives, such as for example thermal stabilizers, UV stabilizers, fire retardants, flame retardants, anti-adhesives, anti-mould, pigments.

Said additives are selected according to the different applications for which the transparent composite film 100 to be obtained is intended, and according to the different weather conditions in which it is to be used.

As mentioned above, the intermediate layer consists of a PVC foil 3 free of plasticizing substances, precisely because it is required that it be a layer stable to mechanical stress and substantially inert, i.e. not sensitive to temperature variations, which therefore maintains its dimensions and its configuration over time.

In the illustrated variant, said PVC foil 3 also comprises additive substances, but only of the UV-ray stabilizing type: being a foil protected inside the composite film, it does not require further particular characterizing additives.

For the applications illustrated above, the transparent composite film 100 according to the invention has an overall thickness of between 400 and 650 µm, where in particular, said PVC foil 3 of said intermediate layer has a thickness of between 70 and 120 µm.

A preferred stratigraphy of the invention has an overall thickness of 500 µm, where:
- said first external PVC film 1 has a thickness of 200 µm;
- said second external PVC film 2 has a thickness of 200 µm;
- said intermediate PVC foil 3 free from plasticizing substances has a thickness of 100 µm.

## Claims

1. Transparent composite film (100) comprising:
- a first external film (1) in PVC;
- a second external film (2) in PVC;
- an intermediate layer,
**characterized in that** said intermediate layer comprises a PVC foil (3) free from plasticizing substances.

2. Transparent composite film (100) according to claim 1, **characterized in that** said first (1) and second (2) external PVC films comprise plasticizing substances.

3. Transparent composite film (100) according to claim 1, **characterized in that** said first (1) and second (2) external PVC films comprise additives selected from one or more of the following substances: thermal stabilizers, UV stabilizers, fire retardants, flame retardants, anti-adhesives, anti-mould, pigments.

4. Transparent composite film (100) according to claim 1, **characterized in that** said PVC foil (3) comprises additive substances of the UV-ray stabilizing type.

5. Transparent composite film (100) according to claim 1, **characterized in that** it has an overall thickness of between 400 and 650 µm.

6. Transparent composite film (100) according to claim 5, **characterized in that** it has an overall thickness of 500 µm.

7. Transparent composite film (100) according to claim 1, **characterized in that** said first (1) and second (2) external PVC films each have a thickness comprised between 150 and 250 µm.

8. Transparent composite film (100) according to claim 1, **characterized in that** said PVC foil (3) of said intermediate layer has a thickness comprised between 70 and 120 µm.

9. Transparent composite film (100) according to claim 8, **characterized in that** said PVC foil (3) of said intermediate layer has a thickness equal to 100 µm.
